(19) Europäisches Patentamt
European Patent Office
Office européen des brevets

(11) EP 4 723 197 A1

(12) EUROPEAN PATENT APPLICATION
published in accordance with Art. 153(4) EPC

(43) Date of publication:
**08.04.2026 Bulletin 2026/15**

(21) Application number: **24815256.3**

(22) Date of filing: **20.05.2024**

(51) International Patent Classification (IPC):
***H01M 4/131*** *(2010.01)* ***H01M 4/36*** *(2006.01)*
***H01M 4/525*** *(2010.01)* ***H01M 4/62*** *(2006.01)*
***H01M 10/052*** *(2010.01)* ***H01M 10/0567*** *(2010.01)*

(52) Cooperative Patent Classification (CPC):
Y02E 60/10

(86) International application number:
**PCT/JP2024/018426**

(87) International publication number:
**WO 2024/247772 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023087960**

(71) Applicant: **Panasonic Intellectual Property Management Co., Ltd.**
**Kadoma-shi, Osaka 571-0057 (JP)**

(72) Inventors:
- **KAWAKITA, Akihiro**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **NON-AQUEOUS ELECTROLYTE SECONDARY BATTERY**

(57) The present invention provides a positive electrode active material capable of improving battery capacity and output characteristics of a non-aqueous electrolyte secondary battery. This non-aqueous electrolyte secondary battery comprises a positive electrode, a negative electrode, and a non-aqueous electrolyte. The positive electrode contains a lithium transition metal composite oxide as a positive electrode active material, and a sulfonic acid compound represented by general formula I. The lithium transition metal composite oxide contains 50 mol% or more of Ni with respect to the total number of moles of metal elements excluding Li. The negative electrode contains a negative electrode active material and contains 200 ppm by mass or more of S with respect to the total mass of the negative electrode active material. (In the formula, A represents a group 1 element or a group 2 element, R represents a hydrocarbon group, and n is 1 or 2.)

EP 4 723 197 A1

Figure 1

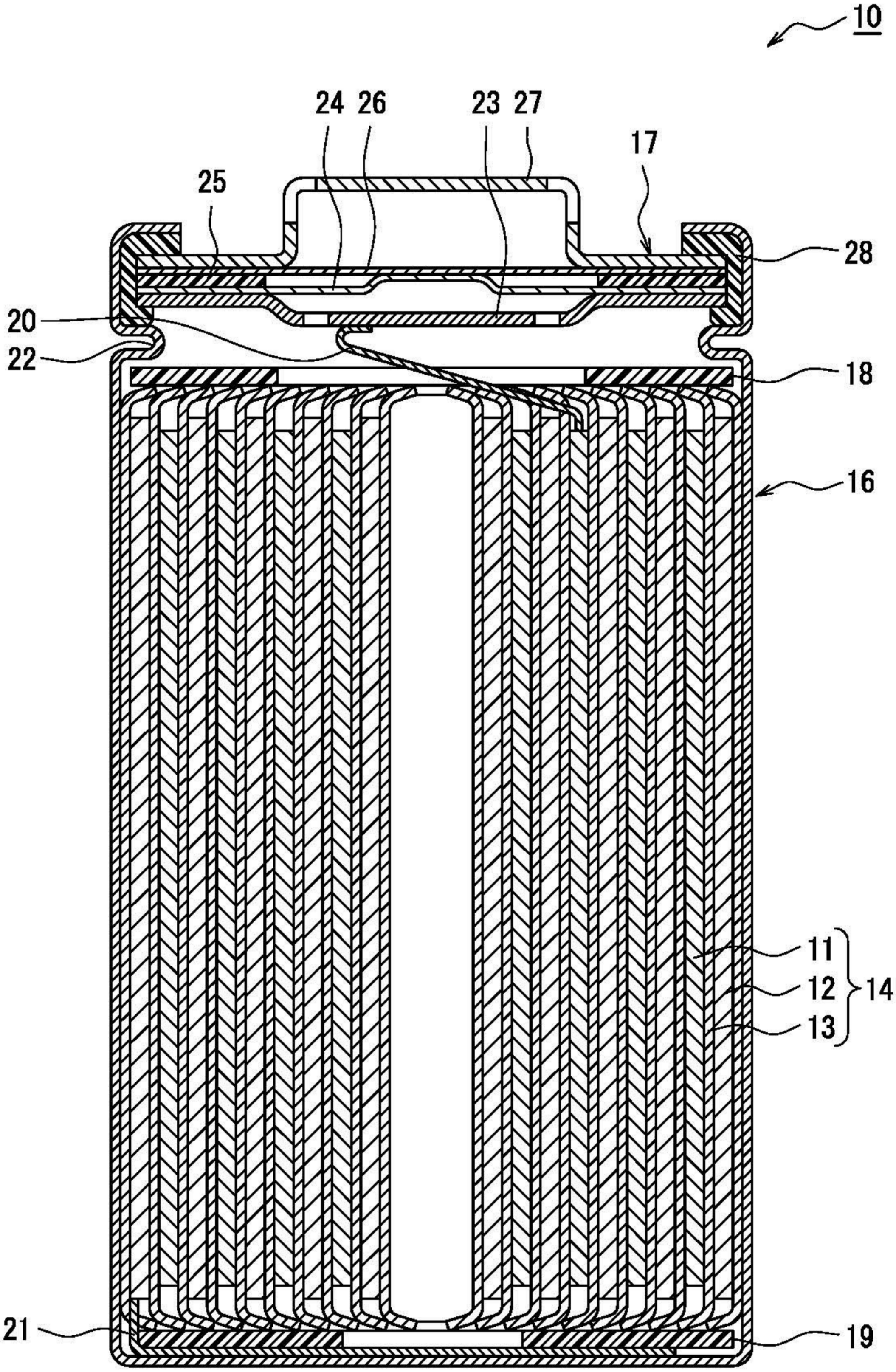

## Description

TECHNICAL FIELD

The present disclosure relates to a non-aqueous electrolyte secondary battery.

BACKGROUND

In recent years, applications of non-aqueous electrolyte secondary batteries have expanded to power sources for electric vehicles and power storage devices for utilizing renewable natural energy. Characteristics required in positive electrode active materials used in non-aqueous electrolyte secondary batteries vary accordingly depending on the applications. For example, for the purpose of reducing reaction resistance caused as a result of storage at high temperatures, Patent Literature 1 discloses a non-aqueous electrolyte secondary battery that uses, as a positive electrode active material, a lithium transition metal composite oxide having a low-solubility Li salt scattered on its surface.

CITATION LIST

PATENT LITERATURE

PATENT LITERATURE 1: Japanese Unexamined Patent Application Publication No. 2019-169286

SUMMARY

In non-aqueous electrolyte secondary batteries, improving the output characteristic while ensuring high capacity is an important issue. The technique described in Patent Literature 1 cannot adequately address such issue, and there is still room for improvement.

An object of the present disclosure is to provide a positive electrode active material which enables to improve the battery capacity and output characteristic of a non-aqueous electrolyte secondary battery.

A non-aqueous electrolyte secondary battery according to one aspect of the present disclosure includes a positive electrode, a negative electrode, and a non-aqueous electrolyte. The positive electrode contains a lithium transition metal composite oxide serving as a positive electrode active material, and a sulfonic acid compound represented by general formula I. The lithium transition metal composite oxide contains Ni in an amount of greater than or equal to 50 mol% based on the total number of moles of metal elements other than Li. The negative electrode contains a negative electrode active material, and contains S in an amount of greater than or equal to 200 mass ppm based on the total mass of the negative electrode active material.

[Chemical Formula 1]

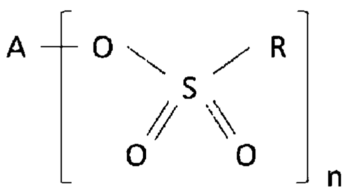

(I)

(where A is a Group 1 or Group 2 element, R is a hydrocarbon group, and n is 1 or 2).

According to the positive electrode active material for non-aqueous electrolyte secondary battery according to one aspect of the present disclosure, it is possible to improve the battery capacity and output characteristic of the non-aqueous electrolyte secondary battery.

BRIEF DESCRIPTION OF DRAWINGS

FIG. 1 is a longitudinal cross-sectional view of a non-aqueous electrolyte secondary battery according to an example embodiment.

DESCRIPTION OF EMBODIMENTS

In general, a lithium transition metal composite oxide containing Ni as a main component is known as a high-capacity positive electrode active material. From the perspective of achieving a high capacity in a battery, the Ni content in a lithium transition metal composite oxide is preferably greater than or equal to 50 mol% based on the total number of moles of metal elements other than Li. Further, as a result of studies conducted by the present inventors, it has been discovered that a non-aqueous electrolyte secondary battery with an improved output characteristic can be realized by including a predetermined sulfonic acid compound in the positive electrode. The reason for this is considered to be that the DC resistance of the positive electrode is reduced by the function of the sulfonic acid compound. The present inventors have further conducted intensive studies, and found that the output characteristic of a non-aqueous electrolyte secondary battery can be further improved by including a predetermined amount of S in the negative electrode in addition to including, as described above, a predetermined sulfonic acid compound in the positive electrode. By configuring the positive electrode and the negative electrode as described above, it is possible to suppress a decrease in discharge capacity even when the discharge rate is increased.

An example embodiment of a non-aqueous electrolyte secondary battery according to the present disclosure will now be described in detail. Although a cylindrical battery in which a spiral-type electrode assembly is housed in a cylindrical outer casing will be referred to below by way of example, the electrode assembly is not limited to being of a spiral type, and may be of a laminated type formed by alternately laminating a plurality of positive electrodes and a plurality of negative electrodes one by one with separators interposed. Further, the outer casing is not limited to being cylindrical, and may be, for example, rectangular, coin-shaped, or the like, or may be a battery housing composed of a laminate sheet including a metal layer and a resin layer.

FIG. 1 is an axial cross-sectional view of a cylindrical secondary battery 10 according to an example embodiment. As shown in FIG. 1, the secondary battery 10 comprises a spiral-type electrode assembly 14, an electrolyte, and an outer casing 16 that houses the electrode assembly 14 and the electrolyte. The electrode assembly 14 includes a positive electrode 11, a negative electrode 12, and a separator 13, and has a spiral structure formed by winding the positive electrode 11 and the negative electrode 12 in a spiral shape with the separator 13 interposed. The outer casing 16 is a bottomed cylindrical metal container having an opening at one axial end, and the opening of the outer casing 16 is closed by a sealing assembly 17. In the following description, for convenience of explanation, the side of the battery toward the sealing assembly 17 will be referred to as "upper", and the side toward the bottom of the outer casing 16 will be referred to as "lower".

The positive electrode 11, the negative electrode 12, and the separator 13, which constitute the electrode assembly 14, are all elongate rectangular members, and are alternately laminated in the radial direction of the electrode assembly 14 by being wound lengthwise in a spiral shape. The separator 13 isolates the positive electrode 11 and the negative electrode 12 from each other. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction. Two sheets of the separator 13 are formed to have a size slightly larger than at least the positive electrode 11, and are arranged, for example, to sandwich the positive electrode 11. The electrode assembly 14 has a positive electrode lead 20 connected to the positive electrode 11 by welding or the like, and a negative electrode lead 21 connected to the negative electrode 12 by welding or the like. In the electrode assembly 14, the lengthwise direction of the positive electrode 11 and the negative electrode 12 corresponds to the winding direction, and the widthwise direction of the positive electrode 11 and the negative electrode 12 corresponds to the axial direction. That is, the end faces, in the widthwise direction, of the positive electrode 11 and the negative electrode 12 form the axial end faces of the electrode assembly 14.

Above and below the electrode assembly 14, insulating plates 18, 19 are provided respectively. In the example shown in FIG. 1, the positive electrode lead 20 extends through a through hole in the insulating plate 18 and toward the sealing assembly 17, while the negative electrode lead 21 extends outside the insulating plate 19 and toward the bottom of the outer casing 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom of the outer casing 16, and the outer casing 16 serves as the negative electrode terminal.

A gasket 28 is provided between the outer casing 16 and the sealing assembly 17 to ensure airtightness inside the battery. The outer casing 16 has a grooved portion 22 formed thereon, where a part of the side wall projects inward, and which supports the sealing assembly 17. The grooved portion 22 is preferably formed in an annular shape along the circumferential direction of the outer casing 16, and supports the sealing assembly 17 on its upper surface. The sealing assembly 17 is fixed to an upper part of the outer casing 16 by means of the grooved portion 22 and an opening end of the outer casing 16 which is crimped against the sealing assembly 17.

The sealing assembly 17 has a structure obtained by laminating, in order from the electrode assembly 14 side,

the internal terminal plate 23, a lower vent member 24, an insulating member 25, an upper vent member 26, and the cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral edge portions of these vent members. When the internal pressure of the battery increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, the separator 13, and the non-aqueous electrolyte, which constitute the secondary battery 10, and in particular regarding the positive electrode 11.

The positive electrode 11 comprises, for example, a positive electrode core and a positive electrode mixture layer formed on the surface of the positive electrode core. The positive electrode mixture layer is preferably formed on both sides of the positive electrode core. As the positive electrode core, it is possible to use a foil of a metal such as aluminum or an aluminum alloy which is stable in the potential range of the positive electrode 11, a film having such metal disposed on its surface layer, or the like. The thickness of the positive electrode core is, for example, greater than or equal to 10 μm and less than or equal to 30 μm.

The positive electrode mixture layer contains, for example, a positive electrode active material, a conductive agent, and a binder. The thickness of the positive electrode mixture layer is, for example, greater than or equal to 10 μm and less than or equal to 150 μm on one side of the positive electrode core. The positive electrode 11 can be produced, for example, by applying a positive electrode mixture slurry containing the positive electrode active material, the conductive agent, and the like onto the surfaces of the positive electrode core, and, after drying the applied coating, rolling the coating to form a positive electrode mixture layer on both sides of the positive electrode core.

Examples of the conductive agent contained in the positive electrode mixture layer include carbon-based particles, including carbon black (CB) such as acetylene black (AB) and Ketjenblack, Ketjenblack, carbon nanotubes (CNT), graphene, and graphite. A single type among these may be used alone, or two or more types may be used in combination. The content of the conductive agent in the positive electrode mixture layer is, for example, greater than or equal to 0.1 mass% and less than or equal to 10 mass% based on the total mass of the positive electrode mixture layer.

In cases where the solvent of the positive electrode mixture slurry is organic, as the binder contained in the positive electrode mixture layer, it is possible to use, for example, fluororesins such as polytetrafluoroethylene (PTFE) and polyvinylidene fluoride (PVDF), polyimide resins, acrylic resins, polyolefin resins, polyacrylonitrile (PAN), and the like. In cases where the solvent of the positive electrode mixture slurry is aqueous, as the binder contained in the positive electrode mixture layer, it is possible to use, for example, styrene-butadiene rubber (SBR), nitrile-butadiene rubber (NBR), carboxymethyl cellulose (CMC) or a salt thereof, polyacrylic acid (PAA) or a salt thereof (such as PAA-Na or PAA-K, which may be a partially neutralized salt), polyvinyl alcohol (PVA), and the like. In either of the cases, a single type among these binders may be used alone, or two or more types may be used in combination. The content of the binder in the positive electrode mixture layer is, for example, greater than or equal to 0.1 mass% and less than or equal to 10 mass% based on the total mass of the positive electrode mixture layer.

The positive electrode active material contained in the positive electrode mixture layer includes a lithium transition metal composite oxide. The lithium transition metal composite oxide contains Ni in an amount of greater than or equal to 50 mol% based on the total number of moles of metal elements other than Li. With this feature, the battery capacity is improved. The Ni content in the lithium transition metal composite oxide is preferably greater than or equal to 80 mol%, and more preferably greater than or equal to 90 mol%, based on the total number of moles of metal elements other than Li. Further, from the perspective of stabilization of the structure, the Ni content is preferably less than or equal to 98 mol%.

The lithium transition metal composite oxide may further contain one or more elements selected from the group consisting of Co, Al, and Mn. The content of each of Co, Al, and Mn in the lithium transition metal composite oxide is, for example, greater than or equal to 0 mol% and less than or equal to 30 mol% based on the total number of moles of metal elements other than Li. Further, the total content of Co, Al, and Mn is, for example, greater than or equal to 0 mol% and less than or equal to 50 mol%.

The lithium transition metal composite oxide is, for example, a composite oxide represented by the general formula $Li_aNi_xM1_yM2_zO_{2-b}$ (where $0.8 \leq a \leq 1.2$, $0.50 \leq x \leq 0.98$, $0 \leq y \leq 0.50$, $0 \leq z \leq 0.05$, $0 \leq b \leq 0.05$, $x+y+z = 1$, M1 is one or more elements selected from the group consisting of Co, Al, and Mn, and M2 is one or more elements selected from the group consisting of Sr, Ca, Nb, Ti, Zr, and W). The ratio of the metal elements contained in the lithium transition metal composite oxide can be measured, for example, by inductively coupled plasma atomic emission spectrometer (ICP-AES).

For example, the lithium transition metal composite oxide includes secondary particles formed by aggregation of primary particles. The particle size of the primary particles is, for example, greater than or equal to 0.02 μm and less than or

equal to 2 μm. The particle size of a primary particle is measured as a diameter of a circle circumscribing a particle image observed by a scanning electron microscope (SEM). The average particle size of the secondary particles is, for example, greater than or equal to 2 μm and less than or equal to 30 μm. Here, the average particle size denotes the volume-based median diameter (D50). D50 means a particle size at which, in a volume-based particle size distribution, the cumulative frequency from the smaller particle size end reaches 50 %, and is also called the mid-level diameter. The particle size distribution of the secondary particles can be measured with a laser diffraction particle size distribution measuring device (e.g., MT3000II manufactured by MicrotracBEL Corp.) using water as the dispersion medium.

The lithium transition metal composite oxide may have a layered structure. Examples of the layered structure of the lithium transition metal composite oxide include a layered structure belonging to the space group R-3m, and a layered structure belonging to the space group C2/m. From the perspective of achieving high capacity and stability of crystal structure, the lithium transition metal composite oxide preferably has a layered structure belonging to the space group R-3m. The layered structure of the lithium transition metal composite oxide may include a transition metal layer, a Li layer, and an oxygen layer.

A metal compound containing a metal element such as W, Zr, Al, or a rare earth element may be present at the surface of the lithium transition metal composite oxide. An example of such compound containing W is $WO_3$. An example of such compound containing Al is $Al_2O_3$. Examples of such compound containing Zr include $ZrO_2$, $Zr(OH)_4$, $Zr(CO_3)_2$, and $Zr(SO_4)_2 \cdot 4H_2O$. Examples of such compound containing a rare earth element include oxides, hydroxides, carbonates, sulfates, nitrates, and phosphates of rare earth elements. Further, the metal compound may contain the above metal elements together with Ca or Sr, and examples of such metal compound include $SrAlO_4$ and $CaAlO_4$. The metal compound may further contain Li, and an example of such metal compound include lithium tungstate.

A non-metal compound may be present at the surface of the lithium transition metal composite oxide. The non-metal compound contains, for example, one or more non-metal elements selected from the group consisting of P and B. An example of such compound containing P is $Li_{3-x}H_xPO_4$ (where $0 \leq x \leq 3$). Examples of such compound containing B include $H_3BO_3$, $Li_3BO_3$, and $Li_2B_4O_7$.

The positive electrode mixture layer may contain other positive electrode active materials in addition to the positive electrode active material of the present embodiment described above. An example of such other positive electrode active materials is a lithium transition metal composite oxide having a Ni content of less than 50 mol%.

The positive electrode 11 further contains a sulfonic acid compound represented by general formula I below. In the positive electrode 11, the positive electrode mixture layer may contain the sulfonic acid compound. By including the sulfonic acid compound in the positive electrode 11, insertion and extraction of $Li^+$ in the positive electrode 11 occur more easily so that the DC resistance is reduced, and the output characteristic is improved.

[Chemical Formula 2]

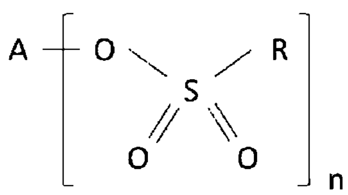

(I)

(where A is a Group 1 or Group 2 element, R is a hydrocarbon group, and n is 1 or 2.)

The sulfonic acid compound is preferably present at the surface of the lithium-transition metal composite oxide. By having the sulfonic acid compound present at the surface of the lithium transition metal composite oxide, $Li^+$ insertion and extraction are facilitated by a coating containing the sulfonic acid compound, and the resulting reduction of the DC resistance becomes more notable.

In the above general formula I, A is preferably a Group 1 element, and more preferably Li. With this feature, the DC resistance can be further reduced. It is noted that when A is a Group 1 element, n = 1.

In general formula I, R is preferably an alkyl group. R is more preferably an alkyl group having 5 or less carbon atoms, even more preferably an alkyl group having 3 or less carbon atoms, and particularly preferably a methyl group. Further, in R, some of the hydrogen atoms bonded to the carbon atoms may be substituted with fluorine atoms. However, in R, not all of the hydrogen atoms bonded to the carbon atoms are substituted with fluorine atoms. The DC resistance can be further reduced when the molecular weight of R is smaller.

Examples of the sulfonic acid compound include lithium methanesulfonate, lithium ethanesulfonate, lithium propanesulfonate, sodium methanesulfonate, magnesium methanesulfonate, and lithium fluoromethanesulfonate.

The amount of the sulfonic acid compound contained in the positive electrode 11 is preferably greater than or equal to 0.1 mass% and less than or equal to 2 mass%, and more preferably greater than or equal to 0.25 mass% and less

than or equal to 1.0 mass%, based on the mass of the lithium transition metal composite oxide.

Presence of the sulfonic acid compound in the positive electrode 11 can be confirmed by Fourier transform infrared spectroscopy (FT-IR). In an infrared absorption spectrum obtained by FT-IR, the positive electrode 11 may have an absorption peak at at least one of positions around 1238 $cm^{-1}$, 1175 $cm^{-1}$, 1065 $cm^{-1}$, and 785 $cm^{-1}$.

In an infrared absorption spectrum obtained by FT-IR, for example, a positive electrode 11 containing lithium methanesulfonate has absorption peaks around 1238 $cm^{-1}$, 1175 $cm^{-1}$, 1065 $cm^{-1}$, and 785 $cm^{-1}$. The peaks around 1238 $cm^{-1}$, 1175 $cm^{-1}$, and 1065 $cm^{-1}$ are absorption peaks caused by SO stretching vibration derived from lithium methanesulfonate. The peak around 785 $cm^{-1}$ is an absorption peak caused by CS stretching vibration derived from lithium methanesulfonate.

Likewise, in the case of a positive electrode 11 containing a sulfonic acid compound other than lithium methanesulfonate, absorption peaks derived from the sulfonic acid compound can be identified as in the case of a positive electrode 11 containing lithium methanesulfonate. It is noted that presence of the sulfonic acid compound in the positive electrode 11 can also be confirmed by ICP, atomic absorption spectrometry, X-ray photoelectron spectroscopy (XPS), synchrotron radiation XRD measurement, TOF-SIMS, and the like.

Presence of the sulfonic acid compound in the positive electrode 11 can be confirmed by proton nuclear magnetic resonance spectroscopy (H-NMR). For example, in H-NMR analysis, a positive electrode 11 containing a sulfonic acid compound in which R in the above general formula I is a methyl group (i.e., a methanesulfonic acid compound) has a single peak at a position with a chemical shift of greater than or equal to 2.76 ppm and less than or equal to 2.86 ppm relative to the methyl group of tetramethylsilane. The chemical shift may be greater than or equal to 2.81 ppm and less than or equal to 2.86 ppm. Likewise, in the case of a positive electrode 11 containing a sulfonic acid compound other than a methanesulfonic acid compound, presence of the sulfonic acid compound can be confirmed by observing a peak shift derived from the sulfonic acid compound and corresponding to that compound, as in the case of a positive electrode 11 containing a methanesulfonic acid compound.

The measurement by H-NMR can be carried out, for example, as follows.

(Pretreatment) 3 mL of heavy water is added to 0.40 g of the positive electrode mixture layer removed from the positive electrode 11. The mixture is stirred for 1 minute, left to stand for 15 hours, and then filtered using a syringe filter to obtain a filtrate.

(NMR Measurement) The filtrate is subjected to NMR measurement under the following conditions.

Instrument used: ECX-400 manufactured by JEOL Ltd.

Measurement solvent: $D_2O$
Measurement temperature: 25 °C
Observed nucleus: 1H
Observation frequency: 395.884 MHz
Pulse irradiation power: 2 dB
Pulse width: 3.6 μsec
Signal acquisition time: 11.0 sec
Repetition time: 55 sec
Number of accumulations: 64
Observation width: 7.4 kHz
Observation center: 5 ppm

The positive electrode 11 containing the lithium transition metal composite oxide and the sulfonic acid compound can be produced, for example, by forming the positive electrode mixture layer using a positive electrode mixture slurry prepared by kneading the sulfonic acid compound together with the lithium transition metal composite oxide, the conductive agent, the binder, and the like. The positive electrode 11 containing the lithium transition metal composite oxide and the sulfonic acid compound may also be produced by using a positive electrode active material in which the sulfonic acid compound is attached to the surface of the lithium transition metal composite oxide. An example method for producing a positive electrode active material in which the sulfonic acid compound is attached to the surface of the lithium transition metal composite oxide will be described below. The production method described herein is merely one example, and the method for producing the positive electrode active material is not limited to this method.

A production process of the positive electrode active material includes a synthesis process in which a lithium transition metal composite oxide is obtained, a washing process in which the lithium transition metal composite oxide obtained in the synthesis process is washed with water and dehydrated to obtain a cake-like composition, an adding process in which at least one of a sulfonic acid compound and a sulfonic acid solution is added to the cake-like composition obtained in the washing process, and a drying process in which the cake-like composition is dried to obtain a powder-like composition.

In the synthesis process, a metal oxide and a Li raw material are mixed together to obtain a mixture. The metal

oxide can be produced by, for example, adding dropwise an alkaline solution of sodium hydroxide or the like to a solution of a metal salt containing Ni, Co, Al, Mn, and the like while stirring to adjust the pH to the alkaline side (for example, to a value of greater than or equal to 8.5 and less than or equal to 12.5), thereby causing a composite hydroxide to be precipitated (or co-precipitated), and heat-treating this metal hydroxide. No particular limitation is imposed on the firing temperature, and is, for example, in the range of higher than or equal to 250 °C and lower than or equal to 600 °C. Examples of the Li raw material include $Li_2CO_3$, LiOH, $Li_2O_2$, $Li_2O$, $LiNO_3$, $LiNO_2$, $Li_2SO_4$, $LiOH{\bullet}H_2O$, LiH, and LiF. During the mixing, an M2 raw material for adding M2, which is one or more elements selected from the group consisting of Sr, Ca, Nb, Ti, Zr, and W, may be mixed together. Examples of the M2 raw material include SrO, CaO, $Nb_2O_5$, $TiO_2$, $ZrO_2$, and $WO_3$.

The synthesis process includes a firing step of firing the above mixture to obtain a lithium transition metal composite oxide. The firing step includes, for example, a first firing step in which firing is performed at a first heating rate to a first set temperature of higher than or equal to 300 °C and lower than or equal to 680 °C, and a second firing step in which firing is performed at a second heating rate from the first set temperature to a second set temperature of higher than 680 °C and lower than or equal to 800 °C. The first heating rate is, for example, in the range of more than or equal to 0.2 °C/min and less than or equal to 4.5 °C/min, and the second heating rate is, for example, in the range of more than or equal to 0.1 °C/min and less than 10 °C/min. In each of the first and second firing steps, further subdivided temperature ranges may be set to perform firing in multiple stages.

The holding time of the first set temperature in the first firing step is preferably less than or equal to 5 hours, and more preferably less than or equal to 3 hours. The holding time of the first set temperature is the time during which the first set temperature is maintained after reaching the first set temperature, and the holding time may be zero. The holding time of the second set temperature in the second firing step is preferably more than or equal to 1 hour and less than or equal to 10 hours, and more preferably more than or equal to 1 hour and less than or equal to 5 hours. The holding time of the second set temperature is the time during which the second set temperature is maintained after reaching the second set temperature. The firing of the mixture is performed, for example, in an oxygen stream having an oxygen concentration of higher than or equal to 60 %, with the flow rate of the oxygen stream being in the range of more than or equal to 0.2 mL/min and less than or equal to 4 mL/min per 10 $cm^3$ of the firing furnace, or more than or equal to 0.3 L/min per 1 kg of the mixture.

The synthesis process is not limited to the above process, and instead of the metal oxide, it is possible to alternatively use a precursor obtained by co-precipitation or mixing of compounds such as hydroxides, oxides, carbonate compounds, and the like containing at least one of Ni, M1, and M2 (where M1 is one or more elements selected from the group consisting of Co, Al, and Mn, and M2 is one or more elements selected from the group consisting of Sr, Ca, Nb, Ti, Zr, and W). When the precursor does not contain compounds of M1, M2, and the like, compounds of M1, M2, and the like may be added and mixed when mixing together the precursor and the Li raw material. Further, such compounds may be used after pulverizing and changing the particle shape or particle size as appropriate, and may also be used after adjusting the water content including hydrates.

In the washing process, the lithium transition metal composite oxide is washed with water and dehydrated to obtain a cake-like composition. The lithium transition metal composite oxide can be used in the form of particles obtained in the synthesis process. By washing with water, it is possible to remove unreacted part of a lithium compound added in the synthesis process and impurities other than the lithium compound. When washing with water, for example, the lithium transition metal composite oxide in an amount of greater than or equal to 300 g and less than or equal to 5000 g is added per 1 L of water. The washing with water may be repeated several times. Dehydration after the washing with water can be carried out, for example, using a filter press.

In the drying process, the cake-like composition obtained in the washing process is dried to obtain a powder-like composition. The drying process may be carried out in a vacuum atmosphere. The drying conditions are, for example, a temperature of higher than or equal to 150 °C and lower than or equal to 400 °C, and a duration of more than or equal to 0.5 hours and less than or equal to 15 hours.

In the adding process, at least one of a sulfonic acid compound and a sulfonic acid solution is added to the cake-like composition obtained in the washing process or to the powder-like composition obtained in the drying process. By doing so, the sulfonic acid compound can be attached to the surface of the lithium transition metal composite oxide. At least one of the sulfonic acid compound and the sulfonic acid solution is preferably added to the cake-like composition. The sulfonic acid compound may be in the form of either a powder or a solution. The sulfonic acid solution is, for example, a methanesulfonic acid solution obtained by dissolving methanesulfonic acid in water. Since a Li compound remains present in the cake-like composition and this residual Li compound is dissolved in the water contained in the cake-like composition, even when the sulfonic acid solution is added, a sulfonic acid compound containing Li is formed. From the perspective of easily obtaining the advantageous effects of the present disclosure, a Li compound or a Li compound solution may be added to the cake-like composition or the powder-like composition together with the sulfonic acid solution, or alternatively, a mixed solution obtained by premixing the sulfonic acid solution and a Li compound or a Li compound solution may be added to the cake-like composition or the powder-like composition. The Li compound is, for example, LiOH, and the Li compound solution is, for example, a LiOH solution obtained by dissolving LiOH in water. The amounts of the Li compound

and the sulfonic acid solution added to the cake-like composition preferably satisfy the following relationship in molar ratio: $0 \leq$ Li compound / sulfonic acid $\leq 1.3$. The amount of the sulfonic acid compound or sulfonic acid added is preferably greater than or equal to 0.1 mass% and less than or equal to 2 mass% based on the mass of the lithium transition metal composite oxide. The concentration of each of the sulfonic acid solution and the sulfonic acid compound solution is, for example, greater than or equal to 0.5 mass% and less than or equal to 40 mass%. The adding process may be carried out at a point during the washing process, after the washing process, during the drying process, or after the drying process, and the timing of the adding process can be changed as appropriate.

A metal compound containing one or more metal elements selected from the group consisting of W, Zr, Al, and rare earth elements, as well as a non-metal compound containing one or more non-metal elements selected from the group consisting of P and B, can be attached to the surface of the lithium transition metal composite oxide, for example, by adding raw materials of the metal compound and the non-metal compound at a point during the synthesis process, after the synthesis process, during the washing process, after the washing process, during the drying process, after the drying process, or during the adding process. Examples of a Zr raw material include $Zr(OH)_4$, $ZrO_2$, $Zr(CO_3)_2$, and $Zr(SO_4)_2 \cdot 4H_2O$. These metal compounds may be used after pulverizing and changing the particle size as appropriate, and may also be used after adjusting the water content including hydrates. Examples of a rare earth raw material include oxides, hydroxides, carbonates, and the like of rare earth elements. Examples of a W raw material include tungsten oxide ($WO_3$) and lithium tungstate ($Li_2WO_4$, $Li_4WO_5$, $Li_6W_2O_9$). As the W raw material, a solution containing W may be used. As an Al raw material, while $Al_2O_3$, $Al(OH)_3$, $Al_2(SO_4)_3$, and the like may be used, the Al raw material may be Al derived from the lithium transition metal composite oxide. An example of a P raw material is $Li_{3-x}H_xPO_4$ (where $0 \leq x \leq 3$). Examples of a B raw material include $H_3BO_3$, $Li_3BO_3$, $Li_2B_4O_7$, and $Li_2BO_2$. When a liquid raw material is added after the drying process, heat treatment may be carried out in order to evaporate water.

[Negative Electrode]

The negative electrode 12 comprises, for example, a negative electrode current collector and a negative electrode mixture layer formed on the surface of the negative electrode current collector. The negative electrode mixture layer is preferably formed on both sides of the negative electrode current collector. As the negative electrode current collector, it is possible to use a foil of a metal such as copper or a copper alloy which is stable in the potential range of the negative electrode 12, a film having such a metal disposed on its surface layer, or the like. The negative electrode mixture layer may contain a negative electrode active material and a binder. The thickness of the negative electrode mixture layer is, for example, greater than or equal to 10 μm and less than or equal to 150 μm on one side of the negative electrode current collector.

No particular limitation is imposed on the negative electrode active material contained in the negative electrode mixture layer so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si or Sn, a metal compound containing Si, Sn, or the like, a lithium-titanium composite oxide, and the like may be used. These materials having a carbon coating provided thereon may also be used. For example, in combination with graphite, it is possible to use a Si-containing compound represented by $SiO_x$ (where $0.5 \leq x \leq 1.6$), a Si-containing compound in which fine particles of Si are dispersed in a lithium silicate phase represented by $Li_{2y}SiO_{(2+y)}$ (where $0 < y < 2$), or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (such as PAA-Na or PAA-K, which may be a partially neutralized salt), and polyvinyl alcohol (PVA). A single type among these may be used alone, or two or more types may be used in combination.

The negative electrode 12 further contains S in an amount of greater than or equal to 200 mass ppm based on the total mass of the negative electrode active material. In the negative electrode 12, the negative electrode mixture layer may contain S. By including S in the negative electrode 12 in an amount of greater than or equal to 200 mass ppm based on the total mass of the negative electrode active material in addition to including the sulfonic acid compound in the positive electrode 11, the output characteristic of the secondary battery 10 is further improved. The S content in the negative electrode 12 can be quantified, for example, by an inductively coupled plasma atomic emission spectrometer (ICP-AES).

The negative electrode 12 may contain a sulfonic acid compound represented by general formula I below. That is, the negative electrode 12 may contain the sulfonic acid compound such that S is contained in an amount of greater than or equal to 200 mass ppm based on the total mass of the negative electrode active material.

[Chemical Formula 3]

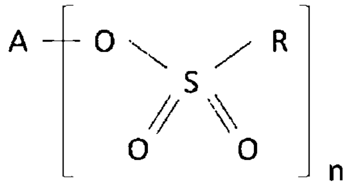

(I)

(where A is a Group 1 or Group 2 element, R is a hydrocarbon group, and n is 1 or 2).

In the above general formula I, A is preferably a Group 1 element, and more preferably Li. With this feature, the DC resistance can be further reduced. It is noted that when A is a Group 1 element, n = 1. In the above general formula I, R is preferably an alkyl group. R is more preferably an alkyl group having 5 or less carbon atoms, even more preferably an alkyl group having 3 or less carbon atoms, and particularly preferably a methyl group. Further, in R, some of the hydrogen atoms bonded to the carbon atoms may be substituted with fluorine. However, in R, not all of the hydrogen atoms bonded to the carbon atoms are substituted with fluorine. The DC resistance can be further reduced when the molecular weight of R is smaller. Examples of the sulfonic acid compound include lithium methanesulfonate, lithium ethanesulfonate, lithium propanesulfonate, sodium methanesulfonate, magnesium methanesulfonate, and lithium fluoromethanesulfonate.

As in the case of the positive electrode 11, presence of the sulfonic acid compound in the negative electrode 12 can be confirmed by Fourier transform infrared spectroscopy (FT-IR), proton nuclear magnetic resonance spectroscopy (H-NMR), and the like.

The negative electrode 12 can be produced, for example, by applying a negative electrode mixture slurry containing the negative electrode active material, the sulfonic acid compound, the binder, and the like onto the surfaces of the negative electrode current collector, and, after drying the applied coating, rolling the coating to form a negative electrode mixture layer on both sides of the negative electrode current collector.

[Separator]

As the separator 13, a porous sheet having ion permeability and insulation property is used. Specific examples of the porous sheet include a microporous thin film, woven fabric, and non-woven fabric. As the material of the separator 13, polyolefins such as polyethylene and polypropylene, cellulose, and the like are suitable. The separator 13 may have a single-layer structure or a laminated structure. Further, on the surface of the separator 13, a highly heat-resistant resin layer made of aramid resin or the like may be formed.

A filler layer containing an inorganic filler may be formed at the interface between the separator 13 and at least one of the positive electrode 11 and the negative electrode 12. Examples of the inorganic filler include oxides and phosphoric acid compounds containing metal elements such as Ti, Al, Si, and Mg. The filler layer can be formed by applying a slurry containing the filler onto the surface of the positive electrode 11, the negative electrode 12, or the separator 13.

[Non-Aqueous Electrolyte]

The non-aqueous electrolyte has, for example, lithium ion conductivity. The non-aqueous electrolyte may be either a liquid electrolyte (or electrolyte solution) or a solid electrolyte.

The liquid electrolyte (or electrolyte solution) contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least some of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane,

furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, phosphates, borates, and imide salts. Examples of the phosphates include lithium difluorophosphate ($LiPO_2F_2$), lithium difluorobis(oxalato)phosphate (LiDFBOP), and lithium tetrafluoro(oxalato)phosphate. Examples of the borates include lithium bis(oxalato)borate (LiBOB), lithium difluoro(oxalato)borate (LiDFOB). As the imide salts, the following are used: lithium bis(fluorosulfonyl) imide ($LiN(FSO_2)_2$), lithium bis(trifluoromethanesulfonate) imide ($LiN(CF_3SO_2)_2$), lithium trifluoromethanesulfonate nonafluorobutanesulfonate imide ($LiN(CF_3SO_2)(C_4F_9SO_2)$), lithium bis(pentafluoroethanesulfonate) imide ($LiN(C_2F_5SO_2)_2$), and the like. Among the foregoing, it is preferable to use $LiPF_6$ from the perspective of ion conductivity, electrochemical stability, and the like. The concentration of the lithium salt per 1 liter of the non-aqueous solvent may be, for example, less than or equal to 4 mol, or less than or equal to 3 mol, and is preferably less than or equal to 1.8 mol, and more preferably greater than or equal to 0.8 mol and less than or equal to 1.8 mol.

The non-aqueous electrolyte may contain an additive. Examples of the additive include unsaturated carbonate esters, acid anhydrides, phenol compounds, benzene compounds, nitrile compounds, isocyanate compounds, sultone compounds, sulfuric acid compounds, borate ester compounds, phosphate ester compounds, and phosphite ester compounds.

Examples of the unsaturated cyclic carbonate esters include vinylene carbonate, 4-methyl vinylene carbonate, 4,5-dimethyl vinylene carbonate, 4-ethyl vinylene carbonate, 4,5-diethyl vinylene carbonate, 4-propyl vinylene carbonate, 4,5-dipropyl vinylene carbonate, 4-phenyl vinylene carbonate, 4,5-diphenyl vinylene carbonate, vinyl ethylene carbonate, and divinyl ethylene carbonate. A single type of unsaturated cyclic carbonate ester may be used alone, or two or more types may be used in combination. In the unsaturated cyclic carbonate ester, some of the hydrogen atoms may be substituted with fluorine atoms. The acid anhydrides may be anhydrides formed by intermolecular condensation of a plurality of carboxylic acid molecules, but are preferably acid anhydrides of polycarboxylic acid. Examples of the acid anhydrides of polycarboxylic acid include succinic anhydride, maleic anhydride, and phthalic anhydride.

Examples of the phenol compounds include phenol and hydroxytoluene. Examples of the benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanato) methylcyclohexane (BIMCH). Examples of the sultone compounds include propane sultone and propene sultone. Examples of the sulfuric acid compounds include ethylene sulfate, ethylene sulfite, dimethyl sulfate, and lithium fluorosulfate. Examples of the borate ester compounds include trimethyl borate and tris(trimethylsilyl) borate. Examples of the phosphate ester compounds include trimethyl phosphate and tris(trimethylsilyl) phosphate. Examples of the phosphite ester compounds include trimethyl phosphite and tris(trimethylsilyl) phosphite.

As the solid electrolyte, for example, a solid or gel polymer electrolyte, an inorganic solid electrolyte, and the like can be used. As the inorganic solid electrolyte, it is possible to use a material known for use in all-solid-state lithium ion secondary batteries and the like (such as an oxide-based solid electrolyte, a sulfide-based solid electrolyte, or a halogen-based solid electrolyte). The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

The non-aqueous electrolyte preferably contains S in an amount of less than or equal to 200 mass ppm based on the total mass of the non-aqueous electrolyte. With this feature, the output characteristic of the secondary battery is further improved. The S content in the non-aqueous electrolyte can be quantified, for example, by an inductively coupled plasma atomic emission spectrometer (ICP-AES). The S content in the non-aqueous electrolyte can be adjusted by adding an additive containing S, such as propane sultone ($C_3H_6O_3S$).

## EXAMPLES

While the present disclosure will now be further described using Examples and Comparative Examples, the present disclosure is not limited to the Examples below.

<Example 1>

[Production of Positive Electrode Active Material]

A composite hydroxide represented by $[Ni_{0.90}Co_{0.05}Al_{0.05}](OH)_2$ and obtained by a co-precipitation method was fired at 500 °C for 8 hours, and a metal oxide containing Ni, Co, and Al was obtained. Next, lithium hydroxide monohydrate ($LiOH•H_2O$) was mixed therein so that the molar ratio of the total amount of Ni, Co, and Al to Li was 1:1.03, and a mixture was thereby obtained. This mixture was heated in an oxygen stream having an oxygen concentration of 95 % (with a flow rate of 2 mL/min per 10 $cm^3$ and 5 L/min per 1 kg of the mixture) at a heating rate of 2.0 °C/min from room temperature to 650 °C, and subsequently at a heating rate of 0.5 °C/min from 650 °C to 740 °C, and a lithium transition metal composite oxide was obtained (synthesis process).

To the lithium transition metal composite oxide obtained in the synthesis process, water was added to obtain a slurry concentration of 1500 g/L, and the slurry was stirred for 15 minutes and then filtered to obtain a cake-like composition (washing process). To this cake-like composition, lithium methanesulfonate in powder form was added (adding process). The amount of lithium methanesulfonate added was 0.3 mass% based on the total mass of the lithium transition metal composite oxide. After the adding process, a drying process was performed in a vacuum atmosphere at 180 °C for 2 hours, and a positive electrode active material of Example 1 was obtained. Presence of lithium methanesulfonate at the surface of the positive electrode active material was confirmed by Fourier transform infrared spectroscopy (FT-IR). The positive electrode active material was measured using an inductively coupled plasma atomic emission spectrometer (ICP-AES), and as a result, elements other than Li and O shown in Table 1 below were confirmed to be present.

[Production of Positive Electrode]

A positive electrode mixture slurry was prepared by mixing together 92 parts by mass of the above positive electrode active material, 5 parts by mass of acetylene black (AB), and 3 parts by mass of polyvinylidene fluoride (PVDF), and further adding thereto an appropriate amount of N-methyl-2-pyrrolidone (NMP). Next, the positive electrode mixture slurry was applied onto both sides of a positive electrode core made of aluminum foil, and the applied coating was dried and then rolled using a roller. The resulting product was cut into a predetermined electrode size, and a positive electrode was thereby produced. In a part of the positive electrode, there was provided an exposed portion where a surface of the positive electrode core was exposed.

[Production of Negative Electrode]

Natural graphite was used as the negative electrode active material. A negative electrode mixture slurry was prepared by mixing together the negative electrode active material, sodium carboxymethyl cellulose (CMC-Na), styrene-butadiene rubber (SBR), and lithium methanesulfonate in a solid mass ratio of 100:1:1:0.08 in an aqueous solution. Next, the negative electrode mixture slurry was applied onto both sides of a negative electrode core made of copper foil, and the applied coating was dried and then rolled using a roller. The resulting product was cut into a predetermined electrode size, and a negative electrode was thereby produced. In a part of the negative electrode, there was provided an exposed portion where a surface of the negative electrode core was exposed. The S content in the negative electrode was measured by an inductively coupled plasma atomic emission spectrometer (ICP-AES), and was found to be 250 mass ppm based on the total mass of the negative electrode active material.

[Preparation of Non-Aqueous Electrolyte]

Into a mixed solvent obtained by mixing together ethylene carbonate (EC), ethyl methyl carbonate (EMC), and dimethyl carbonate (DMC) in a volume ratio of 3:3:4, lithium hexafluorophosphate ($LiPF_6$) was dissolved to a concentration of 1.2 mol/L, and a non-aqueous electrolyte was thereby prepared.

[Production of Test Cell]

A positive electrode lead was attached to the exposed portion of the positive electrode, and a negative electrode lead was attached to the exposed portion of the negative electrode. The positive electrode and the negative electrode were wound in a spiral shape with an interposed separator made of polyolefin, and a spiral-type electrode assembly was thereby produced. This electrode assembly was placed in an outer casing composed of an aluminum laminate sheet, and after injecting the above non-aqueous electrolyte therein, the opening of the outer casing was sealed to obtain a test cell.

[Evaluation of Output Characteristic]

In an ambient temperature of 25 °C, the test cell was charged at a constant current of 0.2 C until reaching 4.2 V,

and then charged at a constant voltage of 4.2 V until reaching 0.02 C. After that, the test cell was left to stand for 1 hour, and then discharged at a constant current of 0.2 C until reaching 2.5 V so as to place the test cell in an initial state. Next, this test cell in the initial state was again charged at a constant current of 0.2 C until reaching 4.2 V, then charged at a constant voltage of 4.2 V until reaching 0.02 C, and then discharged at a constant current of 0.5 C until reaching 2.5 V. The discharge capacity at that time was recorded as the 0.5 C discharge capacity. After a 10-minute rest, the test cell was discharged at a constant current of 0.02 C until reaching 2.5 V, and the discharge capacity at that time was recorded as the 0.02 C discharge capacity. The output characteristic was calculated using the following formula.

Output characteristic = (0.5 C discharge capacity) / (0.5 C discharge capacity + 0.02 C discharge capacity)

<Examples 2 to 5>

Test cells were produced and evaluated in the same manner as in Example 1, except that the amount of lithium methanesulfonate added in the production of the positive electrode active material and the amount of lithium methanesulfonate added in the production of the negative electrode were changed as shown in Table 1, and in Example 5, the non-aqueous electrolyte was prepared as set forth below.

_Method of Preparation of Non-Aqueous Electrolyte in Example 5_

To 100 parts by mass of a solvent obtained by mixing together ethylene carbonate (EC), ethyl methyl carbonate (EMC), and dimethyl carbonate (DMC) in a volume ratio of 3:3:4, 0.4 parts by mass of propane sultone ($C_3H_6O_3S$) was added to prepare a mixed solvent. Into this mixed solvent, lithium hexafluorophosphate ($LiPF_6$) was dissolved to a concentration of 1.2 mol/L, and a non-aqueous electrolyte was thereby prepared.

<Example 6>

A test cell was produced and evaluated in the same manner as in Example 1, except that no lithium methanesulfonate was added in the production of the positive electrode active material, but in the production of the positive electrode, lithium methanesulfonate was mixed with the positive electrode active material, AB, and PVDF to prepare the positive electrode mixture slurry, and the amount of lithium methanesulfonate added in the production of the negative electrode was changed as shown in Table 1. The amount of lithium methanesulfonate added was 0.5 mass% based on the total mass of the lithium transition metal composite oxide.

<Comparative Example 1>

A test cell was prepared and evaluated in the same manner as in Example 1, except that the amount of lithium methanesulfonate added in the production of the positive electrode active material was changed to 0.5 mass%, and no lithium methanesulfonate was added in the production of the negative electrode.

The evaluation results of the test cells of the Examples and Comparative Examples are shown in Table 1. In Table 1, the output characteristics of the test cells of the Examples are shown as values relative to the output characteristic of the test cell of Comparative Example 1, which is assumed to be 100. Table 1 also shows the amounts of sulfonic acid compounds added to the positive and negative electrodes, the S content in the negative electrode, and the S content in the non-aqueous electrolyte. The S content in the non-aqueous electrolyte was obtained by performing ICP-AES analysis on the non-aqueous electrolyte removed from the test cell after evaluating the output characteristic.

[Table 1]

| | Positive electrode | | | | Negative electrode | | | Electrolyte | Evaluation result |
|---|---|---|---|---|---|---|---|---|---|
| | Active material composition (Ni/Co/Al) [mol%] | Sulfonic acid compound | | | S compound | | Amount of S [ppm] | Amount of S [ppm] | Output characteristic |
| | | Type | Amount added [mass%] | Location of presence | Type | Amount added [mass%] | | | |
| Example 1 | 90/5/5 | Li methanesulfonate | 0.3 | Surface of active material | Li methanesulfonate | 0.08 | 250 | 40 | 100.9 |
| Example 2 | 90/5/5 | Li methanesulfonate | 0.5 | Surface of active material | Li methanesulfonate | 0.13 | 400 | 50 | 101.1 |
| Example 3 | 90/5/5 | Li methanesulfonate | 0.5 | Surface of active material | Li methanesulfonate | 0.50 | 1600 | 80 | 101.5 |
| Example 4 | 90/5/5 | Li methanesulfonate | 0.5 | Surface of active material | Li methanesulfonate | 1.00 | 3200 | 90 | 101.2 |
| Example 5 | 90/5/5 | Li methanesulfonate | 0.5 | Surface of active material | Li methanesulfonate | 0.50 | 1600 | 1100 | 100.5 |
| Example 6 | 90/5/5 | Li methanesulfonate | 0.5 | Within mixture layer | Li methanesulfonate | 0.13 | 400 | 60 | 100.6 |
| Comparative Example 1 | 90/5/5 | Li methanesulfonate | 0.5 | Surface of active material | - | - | - | 30 | 100 |

As shown in Table 1, the test cells of the Examples had an improved output characteristic compared to the test cell of the Comparative Example. Accordingly, it is understood that the output characteristic of a non-aqueous electrolyte secondary battery is improved by including a predetermined amount of S in the negative electrode in addition to including a predetermined sulfonic acid compound in the positive electrode and.

The present disclosure is further illustrated by the following embodiments.

Configuration 1:

A non-aqueous electrolyte secondary battery, comprising a positive electrode, a negative electrode, and a non-aqueous electrolyte, wherein

the positive electrode contains a lithium transition metal composite oxide serving as a positive electrode active material, and a sulfonic acid compound represented by general formula I,
the lithium transition metal composite oxide contains Ni in an amount of greater than or equal to 50 mol% based on a total number of moles of metal elements other than Li, and
the negative electrode contains a negative electrode active material, and contains S in an amount of greater than or equal to 200 mass ppm based on a total mass of the negative electrode active material.

[Chemical Formula 4]

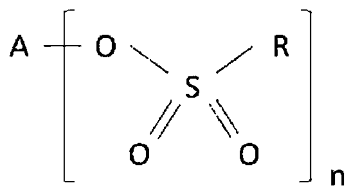

(I)

(where A is a Group 1 or Group 2 element, R is a hydrocarbon group, and n is 1 or 2). Configuration 2:

The non-aqueous electrolyte secondary battery according to Configuration 1, wherein the sulfonic acid compound is present at a surface of the lithium transition metal composite oxide.

Configuration 3:

The non-aqueous electrolyte secondary battery according to Configuration 1 or 2, wherein A is a Group 1 element.

Configuration 4:

The non-aqueous electrolyte secondary battery according to Configuration 1 or 2, wherein A is Li.

Configuration 5:

The non-aqueous electrolyte secondary battery according to any one of Configurations 1 to 4, wherein R is an alkyl group.

Configuration 6:

The non-aqueous electrolyte secondary battery according to any one of Configurations 1 to 4, wherein R is a methyl group.

Configuration 7:

The non-aqueous electrolyte secondary battery according to any one of Configurations 1 to 6, wherein, in an infrared absorption spectrum, the positive electrode has an absorption peak at at least one of positions around 1238 $cm^{-1}$, 1175 $cm^{-1}$, 1065 $cm^{-1}$, and 785 $cm^{-1}$.

Configuration 8:

The non-aqueous electrolyte secondary battery according to any one of Configurations 1 to 7, wherein, in H-NMR analysis, the positive electrode has a single peak at a position with a chemical shift of greater than or equal to 2.76 ppm and less than or equal to 2.86 ppm relative to a methyl group of tetramethylsilane.

Configuration 9:

The non-aqueous electrolyte secondary battery according to any one of Configurations 1 to 8, wherein the negative electrode contains the sulfonic acid compound. Configuration 10:

The non-aqueous electrolyte secondary battery according to Configuration 9, wherein, in an infrared absorption spectrum, the negative electrode has an absorption peak at at least one of positions around 1238 $cm^{-1}$, 1175 $cm^{-1}$, 1065 $cm^{-1}$, and 785 $cm^{-1}$. Configuration 11:

The non-aqueous electrolyte secondary battery according to Configuration 9 or 10, wherein, in H-NMR analysis, the negative electrode has a single peak at a position with a chemical shift of greater than or equal to 2.76 ppm and less than or equal to 2.86 ppm relative to a methyl group of tetramethylsilane.

Configuration 12:

The non-aqueous electrolyte secondary battery according to any one of Configurations 1 to 11, wherein the non-aqueous electrolyte contains S in an amount of less than or equal to 200 mass ppm based on a total mass of the non-aqueous electrolyte.

REFERENCE SIGNS LIST

10 secondary battery; 11 positive electrode; 12 negative electrode; 13 separator; 14 electrode assembly; 16 outer casing; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket.

## Claims

**1.** A non-aqueous electrolyte secondary battery, comprising a positive electrode, a negative electrode, and a non-aqueous electrolyte, wherein

the positive electrode contains a lithium transition metal composite oxide serving as a positive electrode active material, and a sulfonic acid compound represented by general formula I,
the lithium transition metal composite oxide contains Ni in an amount of greater than or equal to 50 mol% based on a total number of moles of metal elements other than Li, and
the negative electrode contains a negative electrode active material, and contains S in an amount of greater than or equal to 200 mass ppm based on a total mass of the negative electrode active material.

[Chemical Formula 1]

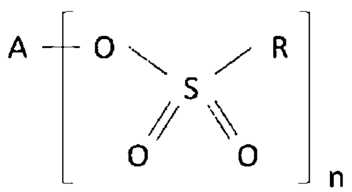

(I)

(where A is a Group 1 or Group 2 element, R is a hydrocarbon group, and n is 1 or 2).

**2.** The non-aqueous electrolyte secondary battery according to claim 1, wherein the sulfonic acid compound is present at a surface of the lithium transition metal composite oxide.

3. The non-aqueous electrolyte secondary battery according to claim 1, wherein A is a Group 1 element.

4. The non-aqueous electrolyte secondary battery according to claim 1, wherein A is Li.

5. The non-aqueous electrolyte secondary battery according to claim 1, wherein R is an alkyl group.

6. The non-aqueous electrolyte secondary battery according to claim 1, wherein R is a methyl group.

7. The non-aqueous electrolyte secondary battery according to claim 1, wherein, in an infrared absorption spectrum, the positive electrode has an absorption peak at at least one of positions around 1238 $cm^{-1}$, 1175 $cm^{-1}$, 1065 $cm^{-1}$, and 785 $cm^{-1}$.

8. The non-aqueous electrolyte secondary battery according to claim 1, wherein, in H-NMR analysis, the positive electrode has a single peak at a position with a chemical shift of greater than or equal to 2.76 ppm and less than or equal to 2.86 ppm relative to a methyl group of tetramethylsilane.

9. The non-aqueous electrolyte secondary battery according to claim 1, wherein the negative electrode contains the sulfonic acid compound.

10. The non-aqueous electrolyte secondary battery according to claim 9, wherein, in an infrared absorption spectrum, the negative electrode has an absorption peak at at least one of positions around 1238 $cm^{-1}$, 1175 $cm^{-1}$, 1065 $cm^{-1}$, and 785 $cm^{-1}$.

11. The non-aqueous electrolyte secondary battery according to claim 9, wherein, in H-NMR analysis, the negative electrode has a single peak at a position with a chemical shift of greater than or equal to 2.76 ppm and less than or equal to 2.86 ppm relative to a methyl group of tetramethylsilane.

12. The non-aqueous electrolyte secondary battery according to claim 1, wherein the non-aqueous electrolyte contains S in an amount of less than or equal to 200 mass ppm based on a total mass of the non-aqueous electrolyte.

Figure 1

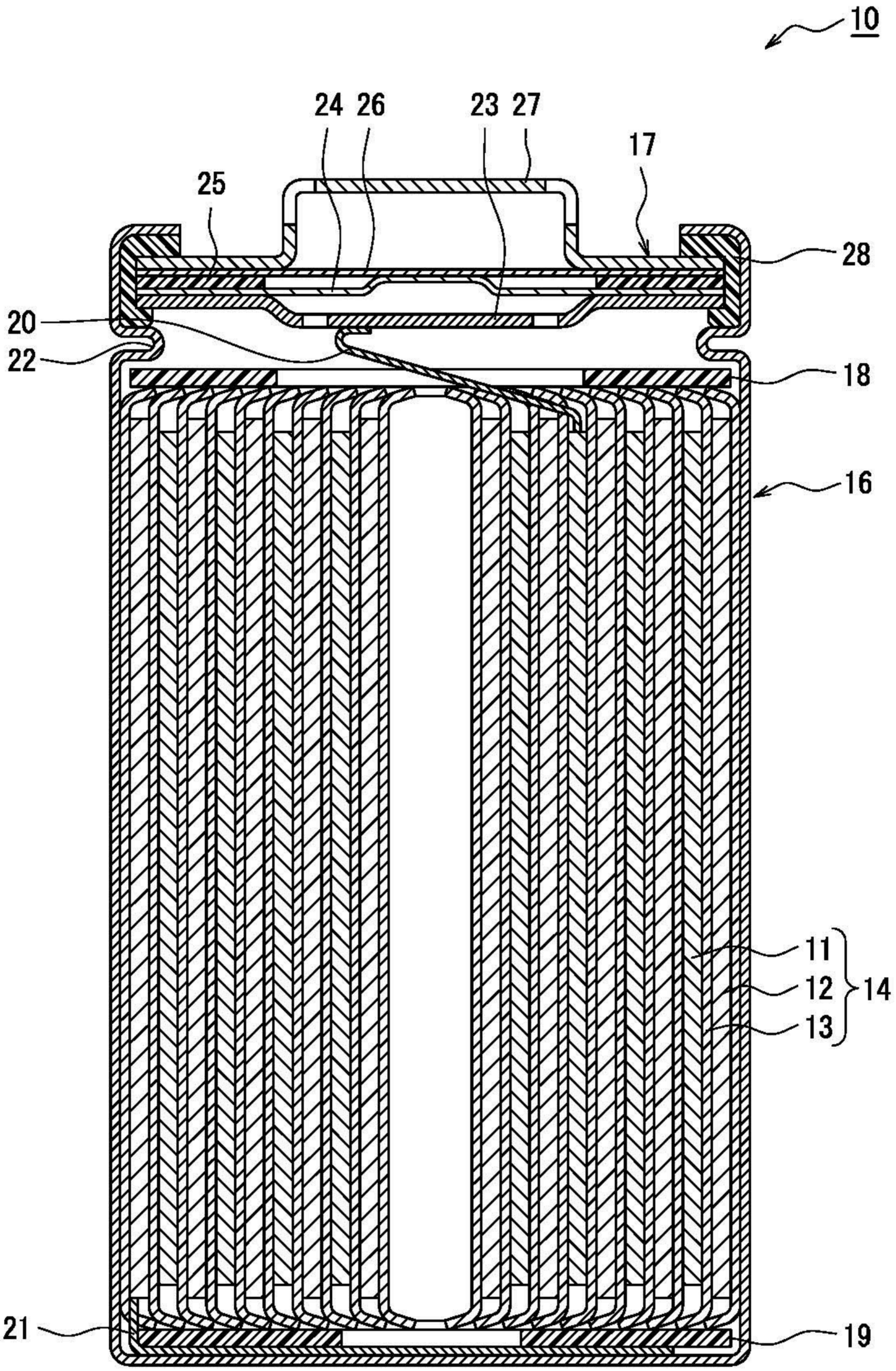

## INTERNATIONAL SEARCH REPORT

International application No.
**PCT/JP2024/018426**

### A. CLASSIFICATION OF SUBJECT MATTER

***H01M 4/131***(2010.01)i; ***H01M 4/36***(2006.01)i; ***H01M 4/525***(2010.01)i; ***H01M 4/62***(2006.01)i; ***H01M 10/052***(2010.01)i; ***H01M 10/0567***(2010.01)i
FI: H01M4/131; H01M4/36 C; H01M4/525; H01M4/62 Z; H01M10/052; H01M10/0567

According to International Patent Classification (IPC) or to both national classification and IPC

### B. FIELDS SEARCHED

Minimum documentation searched (classification system followed by classification symbols)

H01M4/131; H01M4/36; H01M4/525; H01M4/62; H01M10/052; H01M10/0567

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-169286 A (TDK CORPORATION) 03 October 2019 (2019-10-03) paragraphs [0048], [0098], [0105]-[0107], [0121] | 1-12 |
| Y | WO 2014/119375 A1 (NEC CORPORATION) 07 August 2014 (2014-08-07) claims 1, 3, 7-8, paragraphs [0054]-[0055], [0073], [0076], [0096]-[0100], [0102] | 1-12 |
| Y | JP 2018-6164 A (UBE INDUSTRIES, LTD.) 11 January 2018 (2018-01-11) claim 1, paragraphs [0021]-[0029], [0049], [0091]-[0107], [0113] | 1-12 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018426**

| Patent document cited in search report | Publication date (day/month/year) | Patent family member(s) | Publication date (day/month/year) |
|---|---|---|---|
| JP 2019-169286 A | 03 October 2019 | (Family: none) | |
| WO 2014/119375 A1 | 07 August 2014 | US 2016/0006010 A1 claims 1, 3, 7-8, paragraphs [0054], [0073], [0076], [0096]-[0100], [0102] | |
| JP 2018-6164 A | 11 January 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019169286 A